# EUROPEAN PATENT APPLICATION

(11) **EP 2 445 129 A1**
(43) Date of publication of application: **25.04.2012**
(21) Application number: 10306141.2
(22) Date of filing: 19.10.2010
(51) Int. Cl.: H04J 14/02

(54) **Optical add and drop multiplexer**

(71) Applicant: Alcatel Lucent, 75007 Paris (FR)
(72) Inventor: Zami, Thierry, 91620 Nozay (FR)
(74) Representative: Loyer & Abello

(57) **Abstract**

An optical add and drop multiplexing device (1), comprises:
a WDM input (10) for receiving a plurality of incoming optical signals on a plurality of wavelength channels disposed in a plurality of non-overlapping spectral bands,
a drop module (60) comprising an optical receiver (61) for demodulating an optical signal,
a sub-band add module (40) comprising an optical transmitter (43) for generating an added optical signal on a wavelength channel disposed in one of the non-overlapping spectral bands,
an optical coupler (20) comprising a first input connected to the WDM input and a second input (32) connected to the sub-band add module for combining the added optical signal with the plurality of incoming optical signals,
and a wavelength selective switch (30) capable of filtering the combined optical signals so as to select the wavelength channels disposed in a selected subset of the non-overlapping spectral bands.

## Description

### Field of the invention

The invention relates to the technical field of Wavelength division multiplexing (WDM) optical communication systems, in particular to optical add and drop multiplexing devices suitable for transparent or semi transparent optical networks.

### Background

WDM allows the transport of multiple optical signals on a common propagation medium, e.g. an optical fiber. Typically the wavelength channels are located in a spectral transmission window near 1550nm where optical attenuation is low. To maximize the information carrying capacity of an optical link, two conventional solutions consist in increasing the data rate of the optical signals and decreasing the channel spacing. However, such measures make it more difficult to achieve transparent optical connections. Indeed, high data rate signals have an increased optical signal-to-noise ratio (OSNR) requirement and reducing the channel spacing induces more transmission non-linear effects and higher crosstalk between signals.

### Summary

In an embodiment, the invention provides an optical add and drop multiplexing (OADM) device, comprising:
a WDM input for receiving a plurality of incoming optical signals on a plurality of wavelength channels disposed in a plurality of non-overlapping spectral bands,
a drop module comprising an optical receiver for demodulating an optical signal selected among the plurality of incoming optical signals,
a sub-band add module comprising an optical transmitter for generating an added optical signal on a wavelength channel disposed in one of the non-overlapping spectral bands, said wavelength channel having a narrower width than the spectral band,
an optical coupler comprising a first input connected to the WDM input line and a second input connected to the sub-band add module for combining the added optical signal with the plurality of incoming optical signals,
and a reconfigurable band filter connected to an output of the optical coupler for receiving the combined optical signals, wherein the reconfigurable band filter is able to filter the combined optical signals so as to select the wavelength channels disposed in a selected subset of the non-overlapping spectral bands and to pass the filtered combined optical signals to a WDM output.

Embodiments of the optical add and drop multiplexing device may comprise one or more of the following features.

In an embodiment, the drop module is connected to a second output of the optical coupler. This measure makes it possible to use a star coupler having both plural inputs for combining incoming signals with added signals and plural outputs for broadcasting combined signals to a drop line and a transit line. With a star coupler, such functions can be achieved with a relatively low level of attenuation.

In an embodiment, the wavelength channel of the added optical signal is selected so as to not overlap the plurality of incoming optical signals. Such measure makes it possible to aggregate added optical signals with incoming optical signals within a spectral band without interference.

In an embodiment, the sub-band add module comprises a narrowband optical filter adapted to filter out spectral components, e.g. added signal components or noise components that overlap the plurality of incoming optical signals. Such measure makes it possible to limit an impact of the added optical signals on the incoming optical signals, with which they are combined. In an embodiment, the narrowband optical filter comprises an electrically programmable liquid crystal on silicon switching element.

In an embodiment, the reconfigurable band filter comprises a wavelength selective switch (WSS) having a common output and a plurality of inputs, wherein a first input of the wavelength selective switch is connected to the output of the optical coupler and the wavelength selective switch is able to filter the optical signals received on each input so as to selectively pass wavelength channels disposed in a respective subset of the non-overlapping spectral bands to the common output, wherein a respective subset of the non-overlapping spectral bands is selected for each input and the respectively filtered optical signals from each input are combined in the common output.

In an embodiment, a second input of the wavelength selective switch is connected to a band add module, wherein the band add module comprises an optical transmitter for generating a second added optical signal on a wavelength channel disposed in one of the non-overlapping spectral bands.

Such an OADM device can be designed with one or more input lines and one or more output lines, depending on a desired connectivity degree.

In an embodiment with at least two input lines, the OADM device further comprises:
a second WDM input for receiving a second plurality of incoming optical signals on a second plurality of wavelength channels disposed in the plurality of non-overlapping spectral bands, and
a second optical coupler comprising a first input connected to the second WDM input and a second input connected to a sub-band add module for combining a second added optical signal with the second plurality of incoming optical signals,
wherein a second or third input of the wavelength selective switch is connected to an output of the second optical coupler to receive the second combined signals.

In an embodiment, a separate sub-band add module, so-called directional sub-band add module, is connected to each of the optical couplers. In another embodiment, a common sub-band add module, so-called multidirectional sub-band add module, is connected to the second inputs of the first and second optical couplers.

In an embodiment, a second output of the second optical coupler is connected to a drop module. In an embodiment, a separate drop module, so-called directional drop module, is connected to each of the optical couplers. In another embodiment, a common drop module, so-called multidirectional drop module is connected to the second outputs of the first and second optical couplers to demodulate optical signals selected among the first and second pluralities of incoming optical signals.

In an embodiment with at least two output lines, the OADM device further comprises a second wavelength selective switch having a common output and a plurality of inputs, wherein a first input of the second wavelength selective switch is connected to a second or third output of the first optical coupler and a second input of the second wavelength selective switch is connected to a second or third output of the second optical coupler.

In an embodiment, a third input of the second wavelength selective switch is connected to a band add module.

In an embodiment, a separate band add module, so-called directional band add module, is connected to each of the first and second wavelength selective switches. In another embodiment, a common band add module, so-called multidirectional band add module is connected to the first and second wavelength selective switches.

In an embodiment, at least one of the sub-band add module and the band add module comprises one or more wavelength adaptable optical transmitters.

In an embodiment, at least one of the sub-band add module and the band add module comprises one or more bit-rate adaptable optical transmitters.

In an embodiment, at least one of the sub-band add module and band add module comprises a plurality of optical transmitters for generating a plurality of added optical signals on a plurality of wavelength channels disposed in the non-overlapping spectral bands and an optical combiner for combining the added optical signals on a common waveguide.

In an embodiment, the drop module comprises an optical splitter connected to a plurality of coherent receivers.

In an embodiment, each of the plurality of non-overlapping spectral bands has a regular width and is centered on a regular frequency grid.

Aspects of the invention are based on the idea of creating bundles of wavelength channels, or so-called superchannels, each within a given spectral band, and switching each spectral band as a whole in the optical domain to perform functions such as traffic dropping, adding, and transparent forwarding.

Aspects of the invention stem for the observation that a spectral band that is switched as a whole in the optical domain provides a very flexible media for aggregating optical signals at various points along a connection path.

### Brief description of the drawings

These and other aspects of the invention will be apparent from and elucidated with reference to the embodiments described hereinafter, by way of example, with reference to the drawings.
Figure 1 is a functional representation of a transparent optical switching node in accordance with an embodiment.
Figure 2 is a schematic representation of wavelength channels that can be used in the switching node of Figure 1.

### Detailed description of the embodiments

In a transparent WDM optical network, transparent optical switching nodes are connected by optical links to form a given topology. The term "transparent" is applied to a transmission system, in which the signal remains optical without being converted into an electronic signal when passing through a network switching node. Transparency in optical communication networks is a characteristic that makes it possible to reduce the cost of network equipment by eliminating optical-electrical-optical conversions, and therefore the corresponding transducers. Transparency can exist in some or all of the switching nodes of an optical network.

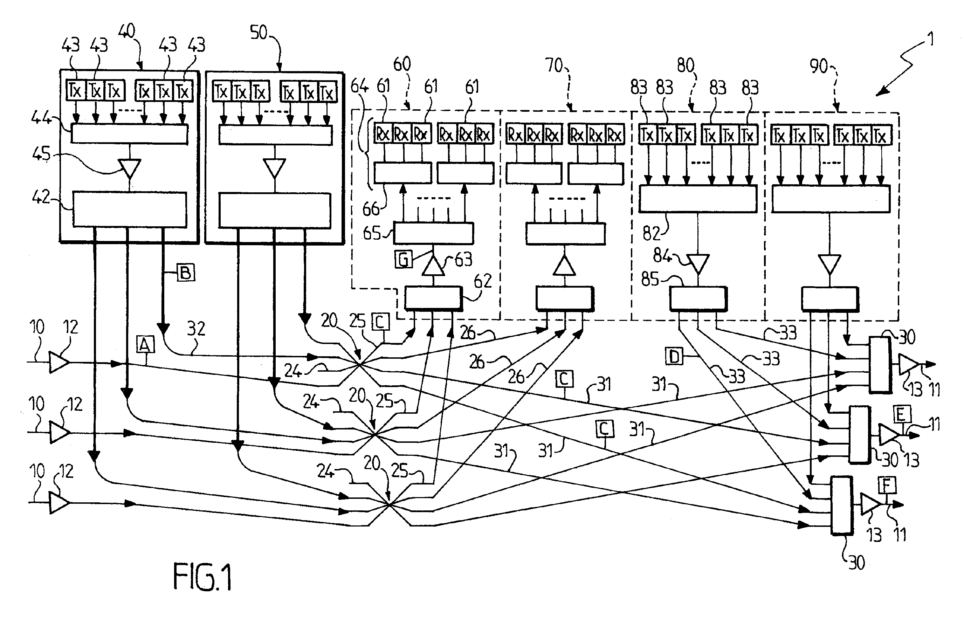

With reference to Figure 1, a transparent optical switching node 1 with degree-3 connectivity will now be described. Namely, switching node 1 can be bidirectionally connected to up to three neighbor nodes as it comprises three WDM input lines 10 for receiving WDM traffic from the three neighbor nodes through optical links and three WDM output lines 11 for sending WDM traffic to the three neighbor nodes through optical links. The neighbor nodes and optical links are omitted on Fig. 1. Switching node 1 can be used in a transparent network or transparent network island with any topology, e.g. mesh, ring, star, tree and others. The same node architecture could be used for a different, higher or lower connectivity degree.

As shown, each WDM input line 10 may comprise an optical amplifier 12 and each WDM output line 11 may comprise an optical amplifier 13 to compensate for the losses of the node components.

Each input line 10 is connected to send the WDM traffic to a respective star coupler 20. Each output line 11 is connected to receive WDM traffic from a WSS 30. Between the star couplers 20 and WSSs 30, a plurality of transit lines 31 are connected to pass transit traffic from any of the input lines 10 to any of the output lines 11, although it is ordinarily not necessary to provide a transit line between a pair of input and output lines that connect to a same neighboring node. The general architecture made of the star couplers 20, transit lines 31 and WSSs 30 can be referred to as broadcast-and-select.

A wavelength selective switch (WSS) refers to a piece of equipment that may be used as a reconfigurable multiplexer or a reconfigurable demultiplexer. When it is acting as a multiplexer, as WSSs 30 are, a plurality of selectable ports serve as inputs, and a common port serves as an output. The wavelength selective switch comprises grating components capable of separating a WDM optical signal received at an input port into a plurality of beams corresponding to predefined non-overlapping spectral bands, and light steering means capable of steering independently the optical beam corresponding to a respective spectral band either towards the output or towards an absorber. Thereby, the spectral component of the incoming WDM signal belonging to a spectral band can be switched as a whole, i.e. either passed to the common output or blocked. The same function is achieved for each spectral band at each input.

This piece of equipment thereby carries out a reconfigurable multiplexing function on spectral bands whose optical frequencies are aligned with one or more predetermined frequency grids. It makes it possible to pass, from each input to the common output, one spectral band, multiple spectral bands, or no spectral band, selected from among the signals received at the respective input.

The switching or steering of beams within the WSS is produced by spatial light manipulation organs, such as micromirrors activated by MEMS micro-actuators or liquid crystal cells. In addition to selecting the spectral bands, these organs may be capable of adjusting the signal attenuation for each spectral band. In this manner, each WSS 30 serves to both select the spectral bands that must be passed to a given output line 11 and to adjust their output power band-by-band towards the corresponding output line 11.

The width of the spectral bands switched by the WSSs 30 depends on the design of the WSSs. Preferably, this width is selected as a multiple of a standard ITU channel spacing, i.e. Nx100GHz, Nx50GHz or Nx25GHz, where N is an integer, e.g. N = 4, N=8 or other. Some advanced WSSs can also provide an adaptable filtering function with adjustable spectral width. However, in the currently preferred embodiment, WSSs 30 have a fixed spectral width.

The spectral width switched by the WSSs 30 defmes a switching granularity of the optical switching node 1. However, the functions of traffic adding and traffic dropping can be achieved at a lower granularity than a whole spectral band, as will now be explained.

With reference to Figure 1, a sub-band add module 40 is connected to another input of the optical coupler 20 to make it possible to groom optical signals from different sources within the spectral bands. Namely, the optical coupler 20 can combine an optical signal from the sub-band add module 40 with an optical signal from the WDM input line 10 located in the same spectral band, so that the spectral domain within one band can be used in a gridless manner to optimize use of the spectrum.

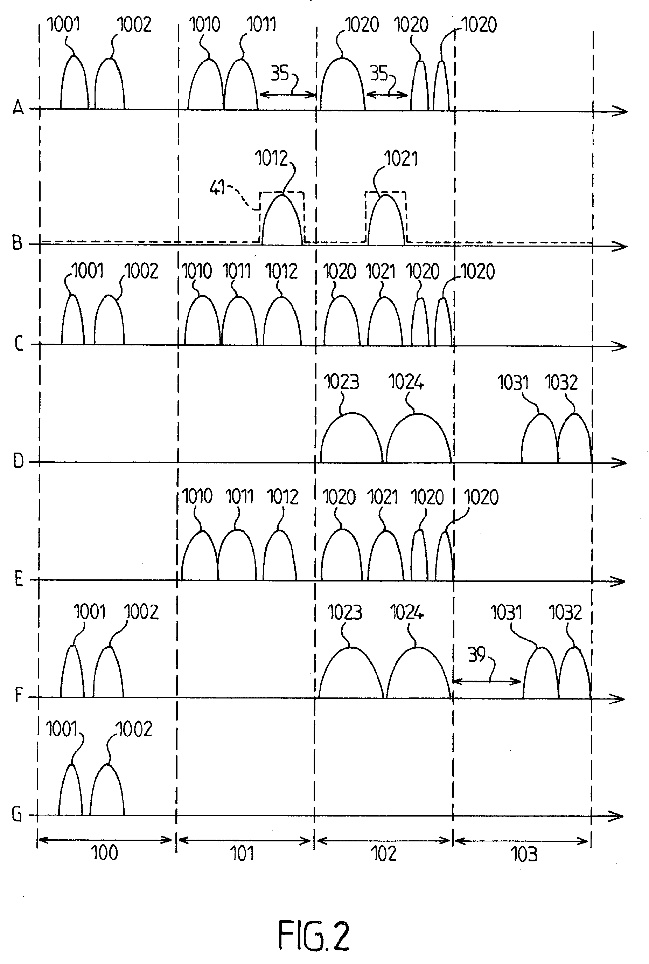

The above grooming function will be illustrated with reference to Fig. 2. In Fig. 2, the intervals 100 to 103 in abscise represent non overlapping spectral bands that the WSSs 30 are capable of switching. The number of spectral bands shown is purely illustrative and not limitative. Lines A to G represent WDM optical signals present at different points in optical switching node 1. Those points are labeled A to G on Fig. 1. Namely, signal A is an incoming WDM signal that comes from a first neighbor node through a WDM input 10 whereas signal B is an added WDM signal which comes from the sub-band add module 40 through an add line 32. On each output of the corresponding optical coupler 20, a signal C is obtained, which is a superposition of signals A and B. For that superposition to be useful, no component signals in WDM signals A and B must be overlapping. Namely as shown, in band 101, signal A comprises two component signals 1010 and 1011 while signal B comprise a component signal 1012 that does not overlap signals 1011 and 1010. Therefore, at the outputs of coupler 20, band 101 carries more information signals and spectral efficiency is increased. A similar situation is illustrated in band 102.

WDM signal E on Fig.2 illustrates the operations of a WSS 30. In this instance, the WSS 30 passes bands 101 and 102 from the transit line labeled C and blocks the bands 100 and 103 from that transit line. Therefore, the component signals groomed within a given band, e.g. signals 1010 to 1012 in band 101, are switched as a whole by the WSS 30.

To avoid degrading the incoming signal A when superposing added signal B, it is preferable to filter added signal B so as to suppress any noise components having the same frequency as the incoming signal A. Namely, the WDM added signal B is preferably passed through an optical filter 42 the filtering function of which fits closely the information signals 1012 and 1021 and suppresses noise, e.g. amplification noise, in the rest of the spectrum. A suitable optical filtering function is shown schematically at numeral 41 on Fig. 2.

In order to use the spectrum within each band in a gridless manner, the optical filter 42 is preferably reconfigurable to adjust the filtering function as a function of the incoming optical signals, e.g. when the spectral occupation of those is evolving over time. A suitable reconfigurable optical filter can be provided as a WSS based on Liquid Crystal on Silicon technology, e.g. available from the Finisar Corporation under the name WaveShaper.

In the embodiment shown on Fig. 1, the optical filter 42 has several outputs to deliver added optical signals to several optical couplers corresponding to several WDM input lines 10 of the node 1. Namely, the sub-band add module 40 is multidirectional. With the aforementioned WaveShaper WSS, an independent filtering function is provided for each output, so that independent added signals can be generated and sent to each optical coupler 20. However, the WaveShaper WSS may have the limitation that each filtered signal has a strictly separate spectral composition. In other words, the WaveShaper WSS may not be able to multicast a given optical signal to multiple outputs simultaneously. Alternatively, the sub-band add module could be constructed with a single output connected to a single coupler 20, namely as a directional sub-band add module.

The sub-band add module 40 also comprises optical transmitters 43 to generate the added signals. Preferably, flexible optical transmitters are used so that a spectral occupation of the bands 100 to 103 can be optimized as a function of the traffic to be added and the incoming traffic. For example, the optical transmitters 43 are wavelength-tunable so that a spectral position of the added signals can be flexibly selected as a function of available intervals within the spectral bands 100 to 103. Also, bit rate-adjustable transmitters can be used, so that a spectral width of an added signal can be flexibly selected as a function of available intervals within the spectral bands 100 to 103. Available intervals are shown at numeral 35 on Fig. 2.

There are many possible ways of connecting the transmitters 43 to the optical filter 42. In the embodiment shown, an optical combiner 44 combines the generated optical signals of all transmitters 43 on an optical line that passes them to a wideband amplifier 45, e.g. EDFA, and then to the WaveShaper input. The amplifier 45 for added signals and amplifier 12 for incoming signals, if provided, should be adjusted to obtain a similar power for signals merged in optical coupler 20. Therefore, given that the optical filter 42 may cause substantial power attenuation of the added signals, that attenuation should be precompensated by amplifier 45.

In the embodiment shown on Fig. 1, a second sub-band add module 50 entirely identical to sub-band add module 40 is connected to further inputs of the optical couplers 20. Providing several sub-band add modules as modules 40 and 50 can serve several purposes:
- Ability to simultaneously generate several independent added signals at a same wavelength or with overlapping spectra, to be sent to different ones of the optical couplers 20,
- Ability to achieve a desired add capacity while limiting the number of optical transmitters in each sub-band add module, e.g. below 20, so that the added signals can be amplified to an acceptable level,
- Redundancy for protection against component faults.

The number of sub-band add modules can be selected as a function of the connectivity degree of the node 1, i.e. number of WDM input lines 10 and/or the number of available inputs of the optical star couplers 20. In a broadcast and select architecture as shown, for a connectivity degree N, optical couplers 20 have at least N-1 outputs connected to transit lines 31, whereas a single input is connected to a respective input line 10. Therefore, in an embodiment using (N-1)x(N-1) star couplers, at least (N-2) inputs are available on each star coupler 20 to connect sub-band add modules. However, in a preferred embodiment, at least one additional output of the couplers 20 serves to connect to a drop module. Thus, in an embodiment using NxN star couplers, at least (N-1) inputs are available on each star coupler 20 to connect sub-band add modules. The embodiment of Fig. 1 actually uses (N+1)x(N+1) star couplers as the optical couplers 20. On each coupler 20, two outputs are connected to drop modules 60 and 70 through drop lines 25 and 26, while one input 24 is left unused.

For couplers 20, it is preferred to use symmetrical couplers with a same number of inputs and outputs. This is based on the observation that power attenuation in an MxP star coupler depends essentially on Log₂[Max(M, P)]. However, asymmetrical star couplers could be used as well. Although the architecture shown is feasible with any value of the connectivity degree N, power attenuation may make it impracticable to go higher than N=8.

The drop module 60 can be designed in several ways. Preferably, receivers 61 are wavelength tunable to accommodate easily a gridless use of the spectrum within each band. In the embodiment shown, the drop module 60 is multidirectional, namely it can receive traffic from all input lines 10. A WSS 62, similar to WSS 30, is mounted as a programmable multiplexer to select the bands to be dropped from each WDM input line 10. WDM signal G on Fig. 2 illustrates the operations of WSS 62. Namely, WSS 62 passes the optical signals 1001 and 1002 disposed in band 100 from the drop line labeled C and blocks all the signals disposed in the bands 101 to 103 from all the drop lines 25.

Although the WSS 62 as the same switching granularity as WSSs 30, namely a band, it is not necessary that all component signals within the band are demodulated by the receivers 61. Namely, additional spectral selection means can be provided to select signals to be dropped within a band, such as tunable optical filters. Preferably, spectral selection is achieved by the optical receivers themselves, configured as coherent receivers with wavelength tunable local oscillator.

In the embodiment shown, the signals passed by the WSS 62 are amplified by a wideband optical amplifier 63 and distributed to a plurality of receiver blocks 64 by an optical coupler 65. Each receiver block 64 comprises a WSS 66 used as a programmable demultiplexer and a plurality of receivers 61 connected to the WSS outputs. The switching granularity of the WSS 66 is preferably the same as that of WSS 30, or it could be thinner.

In the embodiment shown on Fig. 1, a second drop module 70 entirely identical to drop module 60 is connected to further outputs of the optical couplers 20. Providing several drop modules as modules 60 and 70 can serve several purposes:
- Ability to simultaneously demodulate several signals at a same wavelength or with overlapping spectra, received from different ones of the input lines 10,
- Redundancy for protection against component faults.

Alternatively, directional drop modules connected to a single optical coupler 20 may be provided instead, in which case the WSS 62 is not necessary.

A reconfigurable add and drop multiplexer (ROADM) can be obtained by providing at least one sub-band add module, which may be directional or multidirectional, and at least one drop module, which may be directional or multidirectional. However, since the sub-band add module 40 or 50 inserts traffic upstream of the drop module 60 or 70, spectrum portions occupied by traffic to be dropped at the node 1 cannot be reused for adding signals by the sub-band add module 40 or 50. Since a WSS 30 can only pass or block a whole band, if WSS 30 blocks a band to prevent some incoming signals from being passed to a neighbor node, it will block any added signal in the same band. This operation of the WSS 30 is illustrated by signal F on Fig. 2. Namely, WSS 30 blocks all the signals disposed in bands 101 and 102 from the transit line labeled C.

To allow reusing bands where signals have been dropped, an additional add module 80 is provided in the embodiment of Fig. 1. The add module 80 is connected to an input of one WSS 30 (directional case, not shown) or to inputs of all WSS 30 (multidirectional case, shown Fig. 1). The add module comprises optical transmitters 83, e.g. similar to the transmitters 43, to generate added optical signals. The operation of add module 80 is illustrated by WDM signals D and F of Fig. 2.

As shown on line D of Fig. 2, add module 80 generates added optical signals 1023 and 1024 in band 102 and added optical signals 1031 and 1032 in band 103. Namely four optical transmitters 83 serve to generate those added signals. Respective add lines 33 connect an optical splitter 85 to an input of the respective WSSs 30 to broadcast the added signals to all WSSs30. In the example shown, the WSS 30 corresponding to label E blocks the added signals in both bands 102 and 103 whereas the WSS 30 corresponding to label F passes the added signals in both bands 102 and 103 to the WDM output line 11. Hence, in band 102, the incoming signals 1020 and added signal 1021 are substituted by the added signals 1023 and 1024 in WDM signal F. Signals 1001 and 1002 in signals F and G illustrate a drop-and-continue function of the broadcast and select ROADM architecture.

There are many ways of connecting the optical transmitters 83 to the add lines 33. In the embodiment shown, the add module 80 comprises an optical coupler 82 to merge the added signals on an optical line which passes the added signals to a wideband optical amplifier 84 and then to the optical splitter 85.

In the embodiment shown on Fig. 1, a second add module 90 entirely identical to add module 80 is connected to further inputs of the WSSs 30. Providing several add modules as modules 80 and 90 can serve several purposes:
- Ability to simultaneously add several signals at a same wavelength or with overlapping spectra, to different ones of the output lines 11,
- Redundancy for protection against component faults.

Whereas sub-band add module 40 or 50 can add a signal in an available interval within a spectral band already occupied by incoming signals, to achieve optical grooming of signals, add module 80 or 90 can only add signals on a band by band basis, due to the switching granularity of the WSSs 30. Therefore add modules 80 and 90 can be called band add modules. Signals added by band add module 80 or 90 do not necessarily fill up a given band. Namely spectral intervals can remain available, such as interval 39 in band 103, for further optical nodes located downstream along a connection path to groom optical signals in those intervals in the same manner as node 1.

Although the architecture shown is fully transparent, the person skilled in the art will recognize that optical regenerators and/or wavelength converters could be provided in the optical node 1 to regenerate optical signals that cannot be passed transparently to the neighbor node, e.g. due to optical impairments or wavelength contention.

Since the switching granularity of the optical node 1 is an optical band as bands 100 to 103, this node architecture imposes no constraints on the way spectrum is used within each band. Namely channels of any spectral width below the width of one band can be transported and placed in a gridless manner. However, unless the WSSs 30 have an adjustable filter width, no optical signal should bridge several bands.

It will be recognized that spectral collisions between signals must be avoided in any WDM system. Namely, components such as optical transmitters 43 or 83 and WSSs 42 or 30 must be controlled to avoid such collisions. Corresponding control units for the components of node 1 are not shown on Fig. 1 as they are well-known to those skilled in the art. The control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical add and drop multiplexing device (1), comprising:
a WDM input (10) for receiving a plurality of incoming optical signals (1001, 1002, 1010, 1011, 1020) on a plurality of wavelength channels disposed in a plurality of non-overlapping spectral bands (100,101,102),
a drop module (60) comprising an optical receiver (61) for demodulating an optical signal selected among the plurality of incoming optical signals,
a sub-band add module (40) comprising an optical transmitter (43) for generating an added optical signal (1012, 1021) on a wavelength channel disposed in one of the non-overlapping spectral bands (101,102), said wavelength channel having a narrower width than the spectral band,
an optical coupler (20) comprising a first input connected to the WDM input and a second input (32) connected to the sub-band add module for combining the added optical signal with the plurality of incoming optical signals,
and a reconfigurable band filter (30) connected to an output (31) of the optical coupler for receiving the combined optical signals, wherein the reconfigurable band (30) filter is able to filter the combined optical signals so as to select the wavelength channels disposed in a selected subset (101, 102) of the non-overlapping spectral bands and to pass the filtered combined optical signals to a WDM output (11).

2. A device in accordance with claim 1, wherein the drop module (60) is connected to a second output (25) of the optical coupler (20).

3. A device in accordance with claim 1 or 2, wherein the wavelength channel of the added optical signal (1012) is selected so as to not overlap the plurality of incoming optical signals (1010, 1011).

4. A device in accordance with one of claims 1 to 3, wherein the sub-band add module (40) comprises a narrowband optical filter (42) adapted to filter out spectral components that overlap the plurality of incoming optical signals.

5. A device in accordance with one of claims 1 to 4, wherein the narrowband optical filter (42) comprises an electrically programmable liquid crystal on silicon switching element.

6. A device in accordance with one of claims 1 to 5, wherein the reconfigurable band filter (30) comprises a wavelength selective switch having a common output and a plurality of inputs, wherein a first input (31) of the wavelength selective switch is connected to the output of the optical coupler (20) and the wavelength selective switch is able to filter the optical signals received on each input so as to selectively pass wavelength channels disposed in a respective subset of the non-overlapping spectral bands to the common output, wherein a respective subset of the non-overlapping spectral bands is selected for each input and the respectively filtered optical signals from each input are combined in the common output.

7. A device in accordance with claim 6, wherein a second input (33) of the wavelength selective switch is connected to a band add module (80), wherein the band add module comprises an optical transmitter (83) for generating a second added optical signal (1023, 1024) on a wavelength channel disposed in one of the non-overlapping spectral bands (102).

8. A device in accordance with claim 6 or 7, further comprising:
a second WDM input (10) for receiving a second plurality of incoming optical signals on a second plurality of wavelength channels disposed in the plurality of non-overlapping spectral bands, and
a second optical coupler (20) comprising a first input connected to the second WDM input (10) and a second input (32) connected to a sub-band add module (40) for combining a second added optical signal with the second plurality of incoming optical signals,
wherein a second or third input of the wavelength selective switch (30) is connected to an output (31) of the second optical coupler to receive the second combined signals.

9. A device in accordance with claim 8, wherein the sub-band add module (40) is a multidirectional sub-band add module connected to the second inputs (32) of the first and second optical couplers (20).

10. A device in accordance with claim 8 or 9, wherein the drop module (60) is a multidirectional drop module connected to the second outputs (25) of the first and second optical couplers (20) to demodulate optical signals selected among the first and second pluralities of incoming optical signals.

11. A device in accordance with one of claims 8 to 10, further comprising a second wavelength selective switch (30) having a common output and a plurality of inputs, wherein a first input of the second wavelength selective switch is connected to a second or third output (31) of the first optical coupler (20) and a second input of the second wavelength selective switch is connected to a second or third output (31) of the second optical coupler (20).

12. A device in accordance with claim 11, wherein a third input (33) of the second wavelength selective switch is connected to a band add module (80, 90).

13. A device in accordance with claim 12, wherein the band add module (80) is a multidirectional band add module connected to the first and second wavelength selective switches (30).

14. A device in accordance with one of claims 1 to 13, wherein the drop module (60) comprises an optical splitter (65) connected to a plurality of coherent receivers (61).

15. A device in accordance with one of claims 1 to 14, wherein the plurality of non-overlapping spectral bands (100-103) have a regular width and are centered on a regular frequency grid.

## Amended claims

### Amended claims in accordance with Rule 137(2) EPC.

**1.** An optical add and drop multiplexing device (1), comprising:
a WDM input (10) for receiving a plurality of incoming optical signals (1001, 1002, 1010, 1011, 1020) on a plurality of wavelength channels disposed in a plurality of non-overlapping spectral bands (100, 101, 102), said incoming optical signals comprising an incoming optical signal on a first wavelength channel disposed in one of the non-overlapping spectral bands (101, 102), said first wavelength channel having a narrower width than the spectral band,
a drop module (60) comprising an optical receiver (61) for demodulating an optical signal selected among the plurality of incoming optical signals,
a sub-band add module (40) comprising an optical transmitter (43) for generating an added optical signal (1012, 1021) on a second wavelength channel disposed in the one of the non-overlapping spectral bands (101, 102), said second wavelength channel being selected so as to not overlap the plurality of incoming optical signals (1010, 1011) from the WDM input line, said second wavelength channel having a narrower width than the spectral band,
an optical coupler (20) comprising a first input connected to the WDM input and a second input (32) connected to the sub-band add module for combining the added optical signal with the plurality of incoming optical signals,
and a reconfigurable band filter (30) connected to an output (31) of the optical coupler for receiving the combined optical signals, wherein the reconfigurable band (30) filter is able to filter the combined optical signals so as to select the wavelength channels disposed in a selected subset (101, 102) of the non-overlapping spectral bands on a band by band basis and to pass the filtered combined optical signals to a WDM output (11).

**2.** A device in accordance with claim 1, wherein the drop module (60) is connected to a second output (25) of the optical coupler (20).

**3.** A device in accordance with one of claims 1 to 2, wherein the sub-band add module (40) comprises a narrowband optical filter (42) adapted to filter out spectral components that overlap the plurality of incoming optical signals.

**4.** A device in accordance with one of claims 1 to 3, wherein the narrowband optical filter (42) comprises an electrically programmable liquid crystal on silicon switching element.

**5.** A device in accordance with one of claims 1 to 4, wherein the reconfigurable band filter (30) comprises a wavelength selective switch having a common output and a plurality of inputs, wherein a first input (31) of the wavelength selective switch is connected to the output of the optical coupler (20) and the wavelength selective switch is able to filter the optical signals received on each input so as to selectively pass wavelength channels disposed in a respective subset of the non-overlapping spectral bands to the common output, wherein a respective subset of the non-overlapping spectral bands is selected for each input and the respectively filtered optical signals from each input are combined in the common output.

**6.** A device in accordance with claim 5, wherein a second input (33) of the wavelength selective switch is connected to a band add module (80), wherein the band add module comprises an optical transmitter (83) for generating a second added optical signal (1023, 1024) on a wavelength channel disposed in one of the non-overlapping spectral bands (102).

**7.** A device in accordance with claim 5 or 6, further comprising:
a second WDM input (10) for receiving a second plurality of incoming optical signals on a second plurality of wavelength channels disposed in the plurality of non-overlapping spectral bands, and
a second optical coupler (20) comprising a first input connected to the second WDM input (10) and a second input (32) connected to a sub-band add module (40) for combining a second added optical signal with the second plurality of incoming optical signals,
wherein a second or third input of the wavelength selective switch (30) is connected to an output (31) of the second optical coupler to receive the second combined signals.

**8.** A device in accordance with claim 7, wherein the sub-band add module (40) is a multidirectional sub-band add module connected to the second inputs (32) of the first and second optical couplers (20).

**9.** A device in accordance with claim 7 or 8, wherein the drop module (60) is a multidirectional drop module connected to the second outputs (25) of the first and second optical couplers (20) to demodulate optical signals selected among the first and second pluralities of incoming optical signals.

**10.** A device in accordance with one of claims 7 to 9, further comprising a second wavelength selective switch (30) having a common output and a plurality of inputs, wherein a first input of the second wavelength selective switch is connected to a second or third output (31) of the first optical coupler (20) and a second input of the second wavelength selective switch is connected to a second or third output (31) of the second optical coupler (20).

**11.** A device in accordance with claim 10, wherein a third input (33) of the second wavelength selective switch is connected to a band add module (80, 90).

**12.** A device in accordance with claim 11, wherein the band add module (80) is a multidirectional band add module connected to the first and second wavelength selective switches (30).

**13.** A device in accordance with one of claims 1 to 12, wherein the drop module (60) comprises an optical splitter (65) connected to a plurality of coherent receivers (61).

**14.** A device in accordance with one of claims 1 to 13, wherein the plurality of non-overlapping spectral bands (100-103) have a regular width and are centered on a regular frequency grid.
